# EUROPÄISCHE PATENTSCHRIFT

(11) **EP 0 738 375 B1**
(45) Veröffentlichungstag und Bekanntmachung des Hinweises auf die Patenterteilung: **20.09.2000**
(21) Anmeldenummer: 95900763.4
(22) Anmeldetag: 18.11.1994
(51) Int. Cl.: F16D 65/092, F16D 55/224

(54) **BREMSBELAGSATZ FÜR SCHWIMMSATTEL-SCHEIBENBREMSE**
SET OF BRAKE LININGS FOR FLOATING CALIPER DISK BRAKES
JEU DE GARNITURES POUR FREINS A DISQUE A ETRIER FLOTTANT

(30) Priorität: 27.11.1993 DE 4340454
(43) Veröffentlichungstag der Anmeldung: 23.10.1996
(73) Patentinhaber: Continental Teves AG & Co. oHG, 60488 Frankfurt (DE)
(72) Erfinder: WEILER, Rolf, D-65817 Eppstein (DE); SCHIEL, Wolfgang, D-65936 Frankfurt am Main (DE)
(86) Internationale Anmeldenummer: EP9403828
(87) Internationale Veröffentlichungsnummer: WO9514868

(56) Entgegenhaltungen:
- EP-A- 0 150 052
- EP-A- 0 347 523
- DE-A- 1 803 246
- DE-A- 3 815 733
- FR-A- 2 454 560
- GB-A- 2 147 376

## Beschreibung

Die Erfindung betrifft eine Schwimmsattel-Scheibenbremse mit einem zugehörigen Bremsbelagsatz gemäß dem Oberbegriff des Patentanspruches 1.

Eine Schwimmsattel-Scheibenbremse mit einem gattungsgemäßen Bremsbelagsatz ist aus der DE 38 15 733 A1 bekannt. Der bekannte Bremsbelagsatz besteht aus einem ersten Bremsbelag mit einer ersten Haltefeder aus Federblech zum Festklemmen am Bremskolben und einem zweiten Bremsbelag mit einer zweiten Haltefeder zum Festklemmen an einem äußeren Gehäuseschenkel des Schwimmsattels. Dabei sind die erste und die zweite Haltefeder gleich ausgestaltet. Auch die zum Eingriff der ersten Haltefeder bestimmte Bohrung des Bremskolbens weist denselben Durchmesser auf wie die zum Eingriff der zweiten Haltefeder bestimmte teilkreisförmige Ausnehmung des äußeren Gehäuseschenkels.

Bei der bekannten Scheibenbremse sind die beiden Bremsbeläge vorzugsweise gleich ausgestaltet und beim Vertauschen der beiden Bremsbeläge treten keine Probleme auf. Wenn jedoch aus funktionellen Gründen für den ersten Bremsbelag eine andere Form des Reibbelags vorgesehen ist als für den zweiten Bremsbelag, so dürfen die beiden Bremsbeläge bei der Montage keinesfalls vertauscht werden. Wenn sich andererseits die Rückenplatten der beiden Bremsbeläge nicht unterscheiden und auch die zur Abstützung der Rückenplatten bestimmten Führungsflächen der Scheibenbremse auf der inneren Axialseite und auf der äußeren Axialseite in gleicher Weise angeordnet sind, so könnte der für die innere Axialseite bestimmte erste Bremsbelag ohne weiteres auf der äußern Axialseite eingebaut werden und umgekehrt. Die Folge wären jedoch Funktionsmängel der Scheibenbremse.

Aufgabe der Erfindung ist es, einen aus unterschiedlichen Bremsbelägen bestehenden Bremsbelagsatz für eine Schwimmsattel-Scheibenbremse anzugeben, bei dem ein erster Bremsbelag nur auf der inneren Axialseite und ein zweiter Bremsbelag nur auf der äußeren Axialseite des Schwimmsattels eingebaut werden kann.

Die Lösung der Aufgabe ergibt sich aus dem kennzeichnenden Teil des Patentanspruchs 1. Dabei soll eine Schwimmsattel-Scheibenbremse in Verbindung mit einem zugehörigen erfindungsgemäßen Bremsbelagsatz unter Schutz gestellt werden, wobei die Schwimmsattel-Scheibenbremse eine an die erste Haltefeder angepaßte Bohrung des Bremskolbens und eine an die zweite Haltefeder angepaßte Ausnehmung des äußeren Gehäuseschenkels aufweist. Im Prinzip besteht die Lösung darin, auf einfache Weise die ohnehin zur Befestigung des Bremsbelags vorgesehene Haltefeder als Unterscheidungsmerkmal beim ersten Bremsbelag anders auszugestalten als beim zweiten Bremsbelag. Beim korrekten Einbau des Bremsbelagsatzes hält jede Feder in der ihr zugeordneten Öffnung des Bremskolbens bzw. des äußeren Gehäuseschenkels fest. Beim Vertauschen der Bremsbeläge kann jedoch die größere Haltefeder nicht in die kleinere Öffnung gesteckt werden und die kleinere Haltefeder kann nicht in der größeren Öffnung festklemmen. Ein falscher Einbau mit vertauschten Bremsbelägen ist also bei dem erfindungsgemäßen Bremsbelagsatz unmöglich. Ein weiterer Vorteil besteht darin, daß die Erfindung weder bei dem Bremsbelagsatz noch bei der zugehörigen Scheibenbremse höhere Fertigungskosten verursacht.

In einer bevorzugten Ausführungsform gemäß Anspruch 2 sind die Abmessungen der ersten Haltefeder kleiner als die der zweiten. Die vorteilhaften Folgen für die Ausgestaltung der zugehörigen Scheibenbremse werden weiter unten im Zusammenhang mit Anspruch 9 erläutert. Eine Anordnung gemäß Anspruch 3 ermöglicht ein Festklemmen der beiden gegenüberliegenden Federzungen, wobei sich die parallel zur Bremsscheibe gerichteten Kraftkomponenten aufheben und lediglich eine parallel zur Bremskolbenachse gerichtete Kraftkomponente für den Andruck des Bremsbelags am Bremskolben verbleibt.

Die dritte Federzunge ist senkrecht zu den beiden anderen angeordnet und hat keinen Partner, so daß sie eine im wesentlichen auf die Bremskolbenachse zu gerichtete Kraft ausübt, die den Bremsbelag an die Führungsflächen der Scheibenbremse andrückt und ein Klappern verhindern. Vorzugweise weist der zum Andruck bestimmte Abschnitt der dritten Federzunge gemäß Anspruch 4 im wesentlichen denselben Abstand zur Bremskolbenachse auf wie die beiden anderen Federzungen. Diese Ausführungsform ist mit den Merkmalen des weiter unten erläuterten Anspruchs 10 von Vorteil.

In einer bevorzugten Ausgestaltung gemäß Anspruch 5 sind die beiden Haltefedern bis auf die Abstände der Federzungen zueinander gleich ausgestaltet. Dabei wird gemäß Anspruch 6 empfohlen, die Maße der beiden Haltefedern um ungefähr 10 % unterschiedlich zu gestalten. Dies erlaubt eine deutliche Unterscheidbarkeit, ohne daß bei den Haltefedern Funktionsprobleme auftreten. Besonders vorteilhaft wirkt sich die Erfindung aus, wenn gemäß Anspruch 7 die Bremsbeläge gleiche Rückenplatten aufweisen, die beim Einbau leicht vertauscht werden können, und andererseits aber verschieden geformte Reibbeläge besitzen, die keinesfalls vertauscht werden dürfen.

Wenn gemäß Anspruch 8 die Bohrung des Bremskolbens enger ist als die Ausnehmung des äußeren Gehäuseschenkels, ergeben sich Vorteile in der Fertigung des Schwimmsattels, da die für den Bremskolben vorgesehene Zylinderbohrung im Schwimmsattel von einem Werkzeug vorgenommen wird, das durch die Ausnehmung des äußeren Gehäuseschenkels hindurchgreift. Da das Bohrwerkzeug einen runden Querschnitt aufweist, empfiehlt sich gemäß Anspruch 9, auch die Ausnehmung des äußeren Gehäuseschenkels teilkreisförmig auszugestalten. Die drei Federzungen der ersten Haltefeder sind zum Eingriff in die runde Bohrung des Bremskolbens entsprechend angeordnet. Bei der Ausgestaltungsform gemäß Anspruch 9 kann die zum Eingriff in die teilkreisförmige Ausnehmung bestimmte zweite Haltefeder mit Vorteil im Prinzip genauso ausgestaltet werden, wie die erste Haltefeder, wobei lediglich die Abstände der Federzungen von der Bremskolbenachse unterschiedlich sind. Selbstverständlich ist es zweckmäßig, wenn sich gemäß Anspruch 10 die Durchmesser der Ausnehmung und der Bohrung in Abstimmung mit den Maßen der Haltefedern nach Anspruch 6 um ungefähr 10 % unterscheiden.

Ein Ausführungsbeispiel der Erfindung wird nachfolgend anhand der Zeichnungen näher erläutert.

Es zeigen:

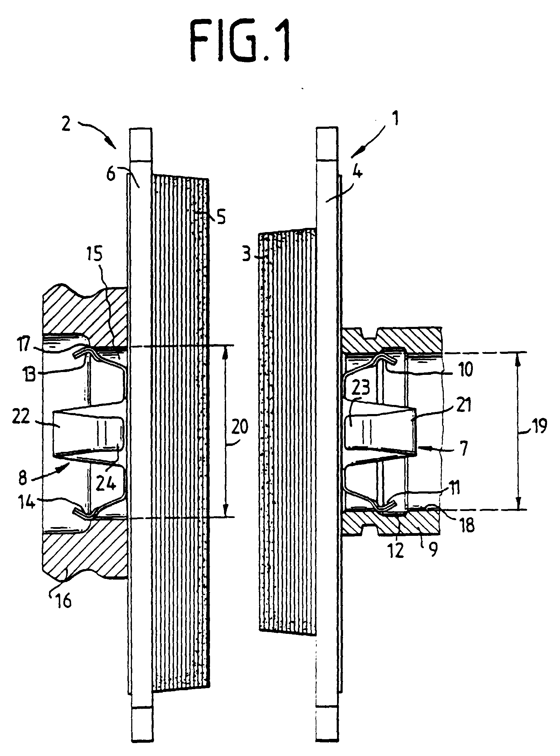

- Figur 1: eine Seitenansicht eines erfindungsgemäßen Bremsbelags in der korrekten Einbausituation mit einem teilweise im Schnitt dargestellten Bremskolben auf der inneren Axialseite und einen teilweise im Schnitt dargestellten äußeren Gehäuseschenkel;
- Figur 2: eine Situation entsprechend Figur 1, jedoch mit vertauschten Bremsbelägen.

Der in den Figuren dargestellte erfindungsgemäße Bremsbelagsatz für eine Schwimmsattel-Scheibenbremse besteht aus einem ersten Bremsbelag 1 und einem zweiten Bremsbelag 2. Der erste Bremsbelag 1 besteht aus einem ersten Reibbelag 3, der auf der Vorderseite einer Rückenplatte 4 befestigt ist. Der zweite Bremsbelag 2 besteht aus einem zweiten Reibbelag 5, der ebenfalls auf einer Rückenplatte 6 befestigt ist. Während die beiden Rückenplatten 4, 6 gleich ausgestaltet sind, hat der erste Reibbelag 3 eine kleinere Fläche als der zweite Reibbelag 5. Der erste Bremsbelag 1 weist außerdem eine erste Haltefeder 7 auf, die auf der Rückseite der Rückenplatte 4 befestigt ist. Der zweite Bremsbelag 2 weist eine zweite Haltefeder 8 auf, die auf der Rückenplatte 6 befestigt ist.

Die Haltefedern 7, 8 dienen zur Befestigung der Bremsbeläge 1, 2 am Schwimmsattel der Scheibenbremse. Der Schwimmsattel besitzt auf seiner inneren Axialseite einen Bremskolben 9, der hohl ist. Die Haltefeder 7 des ersten Bremsbelags 1 ist zum Eingriff in den hohlen Bremskolben 9 bestimmt, um den Bremsbelag 1 am Schwimmsattel zu befestigen und in ständiger Anlage am Bremskolben 9 zu halten. Für diesen Zweck besitzt die erste Haltefeder 7 zwei gegenüberliegend angeordnete Federzungen 10, 11, die in eine Ringnut 12 im Innenraum des hohlen Bremskolbens 9 eingreifen. Die zweite Haltefeder 8 besitzt ebenfalls zwei gegenüberliegend angeordnete Federzungen 13, 14, die zum Festklemmen in einer Ausnehmung 15 eines äußere Gehäuseschenkels 16 bestimmt sind. In dieser Ausnehmung 15 ist eine Stufe 17 ausgebildet, an der die Federzungen 13, 14 einrasten. Der hohle Innenraum des Bremskolbens 9 ist als Bohrung 18 mit kreisförmigen Querschnitt und mit dem Durchmesser 19 ausgestaltet. Die Ausnehmung 15 des äußeren Gehäuseschenkels 16 ist teilweise halbkreisförmig mit dem Durchmesser 20 ausgestaltet. Der Durchmesser 19 ist etwas kleiner als der Durchmesser 20. Erfindungsgemäß ist der Abstand der beiden Federzungen 10, 11 der ersten Haltefeder 7 an den Durchmesser 19 und die beiden Federzungen 13, 14 der zweiten Haltefeder 8 an den Durchmesser 20 angepaßt, das heißt die Federzungen 10, 11 liegen näher aneinander als die weiter von einander entfernten Federzungen 13, 14. In der Form sind die beiden Haltefedern 7, 8 bis auf die Abstände der Federzungen 10, 11, 13, 14 gleich ausgestaltet. Dabei unterscheiden sich die Abstände genauso wie die Durchmesser 19, 20 in ihrem Maß um ungefähr 10 %.

Zusätzlich zu den im 180°-Winkel angeordneten Federzungen 10, 11 bzw. 13, 14 besitzen die Haltefedern 7, 8 jeweils noch eine dritte Federzunge 21, 22, die gegenüber den anderen im 90°-Winkel angeordnet ist. Die dritte Federzunge 21, 22 verläuft von der Rückenplatte 4, 6 des Bremsbelags 1, 2 ausgehend zunächst von der Rückenplatte 4, 6 weg, um dann nach einer Umbiegung wieder auf die Rückenplatte 4, 6 zuzulaufen. Das Ende der dritten Federzunge 21, 22 liegt ganz in der Nähe der Rückenplatte 4, 6 an der Wand der Bohrung 18 des Bremskolbens 9 bzw. der Wand der Ausnehmung 15 des äußeren Gehäuseschenkels 16 an und hält den jeweiligen Bremsbelag 1, 2 dabei klapperfrei in seinen nicht gezeigten Führungen der Scheibenbremse. Im Hinblick auf den kreisförmigen Querschnitt der Bohrung 18 bzw. den halbkreisförmigen Querschnitt der Ausnehmung 15 befindet sich der zur Anlage bestimmte Abschnitt 23 bzw. 24 der dritten Federzunge 21, 22 im wesentlichen in demselben Abstand zur Bremskolbenachse wie die beiden anderen Federzungen 10, 11 bzw. 13, 14.

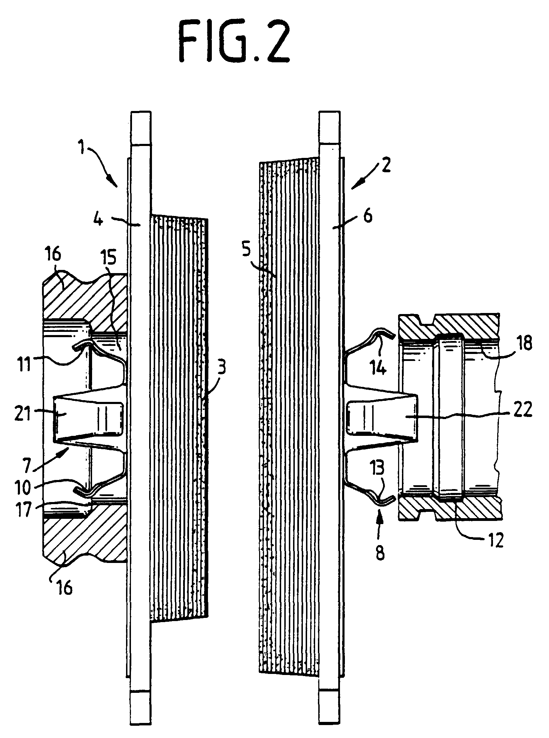

Die in Figur 2 dargestellte Situation entsteht beim Vertauschen des ersten Bremsbelags 1 mit dem zweiten Bremsbelag 2. In diesem Fall kommt die erste Haltefeder 7 in der Ausnehmung 15 des äußeren Gehäuseschenkels 16 zu liegen. Da aber der Abstand der Federzungen 10, 11 deutlich kleiner ist als der Durchmesser der Ausnehmung 15, kann die erste Haltefeder 7 in der Ausnehmung 15 nicht einrasten und der erste Bremsbelag 1 kann nicht befestigt werden. Beim zweiten Bremsbelag 2 ist die Lage umgekehrt. Der Abstand der Federzungen 13, 14 ist deutlich größer als der Innendurchmesser der Bohrung 18, so daß die zweite Feder 8 nicht in die Bohrung 18 des Bremskolbens 9 eingeführt werden kann. Es ist daher auch unmöglich, den zweiten Bremsbelag 2 auf der falschen Axialseite des Schwimmsattels einzubauen.

## Patentansprüche

1. Schwimmsattel-Scheibenbremse mit einem zugehörigen Bremsbelagsatz, mit einem für die innere Axialseite eines Schwimmsattels zur Anlage an einem hohlen Bremskolben (9) bestimmten ersten Bremsbelag (1) mit einer einen ersten Reibbelag (3) tragenden Rückenplatte (4), auf deren Rückseite eine erste Haltefeder (7) zum Festklemmen des ersten Bremsbelags (1) innerhalb einer Bohrung (18) des Bremskolbens (9) unlösbar befestigt ist, mit einem zur Anlage an einer Ausnehmung (15) eines äußeren Gehäuseschenkels (16) des Schwimmsattels bestimmten zweiten Bremsbelag (2) mit einer einen zweiten Reibbelag (5) tragenden Rückenplatte (6), auf deren Rückseite eine zweite Haltefeder (8) zum Festklemmen des zweiten Bremsbelags (2) an einer Ausnehmung (15) des äußeren Gehäuseschenkels (16) unlösbar befestigt ist, dadurch **gekennzeichnet**, daß zwei gegenüberliegende Federzungen (10, 11) der ersten Haltefeder (7) in einem anderen Abstand zueinander angeordnet sind als zwei gegenüberliegende Federzungen (13, 14) der zweiten Haltefeder (8), wobei die Bohrung (18) des Bremskolbens (9) eine an die erste Haltefeder (7) angepaßte andere Weite aufweist als die an die zweite Haltefeder (8) angepaßte Ausnehmung (15) des äußeren Gehäuseschenkels (16).

2. Schwimmsattel-Scheibenbremse mit einem zugehörigen Bremsbelagsatz nach Anspruch 1, dadurch **gekennzeichnet**, daß die beiden Federzungen (10, 11) der ersten Haltefeder (7) in einem kleineren Abstand zueinander angeordnet sind als die beiden Federzungen (13, 14) der zweiten Haltefeder (8).

3. Schwimmsattel-Scheibenbremse mit einem zugehörigen Bremsbelagsatz nach Anspruch 1 oder 2, dadurch **gekennzeichnet**, daß die zwei Federzungen (10, 11 bzw. 13, 14) beider Haltefedern (7, 8) in Bezug auf die Bremskolbenachse jeweils in einem Winkel von 180° gegenüberliegend angeordnet sind, und daß jeweils eine dritte Federzunge (21, 22) in einem Winkel von 90° zu den zwei anderen Federzungen (10, 11 bzw. 13, 14) angeordnet ist.

4. Schwimmsattel-Scheibenbremse mit einem zugehörigen Bremsbelagsatz nach Anspruch 3, dadurch **gekennzeichnet**, daß der am Bremskolben (9) bzw. am äußeren Gehäuseschenkel (16) anliegende Abschnitt (23, 24) der dritten Federzunge (21, 22) im wesentlichen denselben Abstand zur Bremskolbenachse aufweist, wie die beiden anderen Federzungen (10, 11 bzw. 13, 14).

5. Schwimmsattel-Scheibenbremse mit einem zugehörigen Bremsbelagsatz nach einem der vorhergehenden Ansprüche, dadurch **gekennzeichnet**, daß die Haltefedern (7, 8) bis auf die Abstände der Federzungen (10, 11 bzw. 13, 14) zueinander gleich ausgestaltet sind.

6. Schwimmsattel-Scheibenbremse mit einem zugehörigen Bremsbelagsatz nach einem der vorhergehenden Ansprüche, dadurch **gekennzeichnet**, daß sich der Abstand der Federzungen (10, 11) der ersten Haltefeder (7) vom Abstand der Federzungen (13, 14) der zweiten Haltefeder (8) um ungefähr 10 % unterscheidet.

7. Schwimmsattel-Scheibenbremse mit einem zugehörigen Bremsbelagsatz nach einem der vorhergehenden Ansprüche, dadurch **gekennzeichnet**, daß der erste Bremsbelag (1) und der zweite Bremsbelag (2) gleiche Rückenplatten (4, 6) aufweisen, und daß der erste Reibbelag (3) eine andere Form besitzt als der zweite Reibbelag (5).

8. Schwimmsattel-Scheibenbremse mit einem zugehörigen Bremsbelagsatz nach einem der Ansprüche 1-7, dadurch **gekennzeichnet**, daß die Bohrung (18) des Bremskolbens (9) enger ist als die Ausnehmung (15) des äußeren Gehäuseschenkels (16).

9. Schwimmsattel-Scheibenbremse mit einem zugehörigen Bremsbelagsatz nach Anspruch 8, dadurch **gekennzeichnet**, daß die Ausnehmung (15) des äußeren Gehäuseschenkels (16) teilkreisförmig ist und einen größeren Durchmesser (20) aufweist, als der Durchmesser (19) der Bohrung (18) des Bremskolbens (9).

10. Schwimmsattel-Scheibenbremse mit einem zugehörigen Bremsbelagsatz nach Anspruch 9, dadurch **gekennzeichnet**, daß sich die Durchmesser (19, 20) um ungefähr 10 % unterschei

## Claims

1. A floating-caliper disc brake with an associated set of brake pads, including a first brake pad (1) used for abutment on a hollow brake piston (9) on the axially inner side of a floating caliper, the first brake pad including a backplate (4) which carries a first friction lining (3) and has unremovably attached to its rear side a first retaining spring (7) for clamping engagement of the first brake pad (1) within a bore (18) of the brake piston (9), and a second brake pad (2) used for abutment on a recess (15) of an external housing leg (16) of the floating caliper, the second brake pad including a backplate (6) which carries a second friction lining (5) and has unremovably attached to its rear side a second retaining spring (8) for clamping engagement of the second brake pad (2) on a recess (15) of the external housing leg (16),
**characterized** in that the distance between two opposed resilient tongues (10, 11) of the first retaining spring (7) is different from the distance between two opposed resilient tongues (13, 14) of the second retaining spring (8), wherein the bore (18) of the brake piston (9) has a width that is conformed to the first retaining spring (7) and is different from the width of the recess (15) in the external housing leg (16) that is conformed to the second retaining spring (8).

2. A floating-caliper disc brake with an associated set of brake pads as claimed in claim 1,
**characterized** in that the distance between the two resilient tongues (10, 11) of the first retaining spring (7) is smaller than the distance between the two resilient tongues (13, 14) of the second retaining spring (8).

3. A floating-caliper disc brake with an associated set of brake pads as claimed in claim 1 or claim 2,
**characterized** in that the two resilient tongues (10, 11 and 13, 14, respectively) of both retaining springs (7, 8) in relation to the axis of the brake piston are arranged opposite each other at an angle of 180°, and in that a third resilient tongue (21, 22) is respectively arranged at an angle of 90° in relation to the other two resilient tongues (10, 11 and 13, 14, respectively).

4. A floating-caliper disc brake with an associated set of brake pads as claimed in claim 3,
**characterized** in that the portion (23, 24) of the third resilient tongue (21, 22) which abuts on the brake piston (9) or on the external housing leg (16) generally has the same distance to the axis of the brake piston as the other two resilient tongues (10, 11 and 13, 14, respectively).

5. A floating-caliper disc brake with an associated set of brake pads as claimed in any one of the preceding claims,
**characterized** in that the retaining springs (7, 8) have an identical design, with the exception of the distances between the resilient tongues (10 and 11, and 13 and 14, respectively).

6. A floating-caliper disc brake with an associated set of brake pads as claimed in any one of the preceding claims,
**characterized** in that the distance between the resilient tongues (10, 11) of the first retaining spring (7) differs from the distance between the resilient tongues (13, 14) of the second retaining spring (8) by roughly 10 %.

7. A floating-caliper disc brake with an associated set of brake pads as claimed in any one of the preceding claims,
**characterized** in that the first brake pad (1) and the second brake pad (2) have identically designed backplates (4, 6), and in that the first friction lining (3) and the second friction lining (5) are different in shape.

8. A floating-caliper disc brake with an associated set of brake pads as claimed in any one of claims 1 to 7,
**characterized** in that the bore (18) of the brake piston (9) is narrower than the recess (15) of the external housing leg (16).

9. A floating-caliper disc brake with an associated set of brake pads as claimed in claim 8,
**characterized** in that the recess (15) of the external housing leg (16) has the shape of part of a circle, and the diameter (20) of the recess is larger than the diameter (19) of the bore (18) in the brake piston (9).

10. A floating-caliper disc brake with an associated set of brake pads as claimed in claim 9,
**characterized** in that the diameters (19, 20) differ by roughly 10 %.

## Revendications

1. Frein à disque à étrier flottant avec un jeu associé de garnitures, comportant une première plaquette de frein (1) pour le côté axial intérieur d'un étrier flottant, à appliquer contre un piston de frein creux (9) et dotée d'un patin (4) qui porte une première garniture de friction (3) et sur le côté arrière duquel un premier ressort de retenue (7), destiné à caler la première plaquette de frein (1), à l'intérieur d'un alésage (18) du piston de frein (9), est fixé de façon inamovible, et comportant une seconde plaquette de frein (2), à appliquer contre un évidemment 15 d'une branche extérieure de carter (16) de l'étrier flottant et dotée d'un patin (6) qui porte une seconde garniture de friction (5) et sur le côté arrière duquel un second ressort de retenue (8), destiné à caler la seconde plaquette de frein (2), dans un évidement (15) de la branche extérieure de carter (16), est fixé de manière inamovible, **caractérisé** en ce que deux languettes de ressort opposées (10, 11) du premier ressort de retenue (7) sont disposées à un écartement différent de l'écartement entre deux languettes de ressort opposées (13, 14) du second ressort de retenue (8), l'alésage (18) du piston de frein (9) possédant une largeur, adaptée au premier ressort de retenue (7), différente de celle de l'évidement (15), adapté au second ressort de retenue (8), de la branche extérieure de carter (16).

2. Frein à disque à étrier flottant avec un jeu associé de garnitures selon la revendication 1, **caractérisé** en ce que les deux languettes (10, 11) du premier ressort de retenue (7) sont disposées à un plus petit écartement que les deux languettes (13, 14) du second ressort de retenue (8).

3. Frein à disque à étrier flottant avec un jeu associé de garnitures selon la revendication 1 ou 2, **caractérisé** en ce que les deux languettes (respectivement 10, 11 et 13, 14) des deux ressorts de retenue (7, 8) sont respectivement disposées en vis-à-vis sous un angle de 180° par rapport à l'axe du piston de frein, et en ce qu'une troisième languette respective (21, 22) est disposée sous un angle de 90° par rapport aux deux autres languettes (respectivement 10, 11 et 13, 14).

4. Frein à disque à étrier flottant avec un jeu associé de garnitures selon la revendication 3, **caractérisé** en ce que la partie (23, 24) de la troisième languette (21, 22) qui s'applique contre le piston de frein (9), ou respectivement contre la branche extérieure de carter (16), se trouve sensiblement à la même distance de l'axe du piston de frein que les deux autres languettes (respectivement 10, 11 et 13, 14).

5. Frein à disque à étrier flottant avec un jeu associé de garnitures selon l'une quelconque des revendications précédentes, **caractérisé** en ce que les ressorts de retenue (7, 8) sont, à l'exception de l'écartement de leurs languettes (respectivement 10, 11 et 13, 14), de configuration identique.

6. Frein à disque à étrier flottant avec un jeu associé de garnitures selon l'une quelconque des revendications précédentes, **caractérisé** en ce que l'écartement des languettes (10, 11) du premier ressort de retenue (7) se différencie d'environ 10 % de l'écartement des languettes (13, 14) du second ressort de retenue (8).

7. Frein à disque à étrier flottant avec un jeu associé de garnitures selon l'une quelconque des revendications précédentes, **caractérisé** en ce que la première plaquette de frein (1) et la seconde plaquette de frein (2) possèdent des patins (4, 6) identiques, et en ce que la première garniture de friction (3) possède une autre forme que la seconde garniture de friction (2).

8. Frein à disque à étrier flottant avec un jeu associé de garnitures selon l'une quelconque des revendications 1 à 7, **caractérisé** en ce que l'alésage (18) du piston de frein (9) est plus étroit que l'évidement (15) de la branche extérieure de carter (16).

9. Frein à disque à étrier flottant avec un jeu associé de garnitures selon la revendication 8, **caractérisé** en ce que l'évidement (15) de la branche extérieure de carter (16) est en forme de cercle partiel et possède un diamètre (20) plus grand que le diamètre (19) de l'alésage (18) du piston de frein (9).

10. Frein à disque à étrier flottant avec un jeu associé de garnitures selon la revendication 9, **caractérisé** en ce que les diamètres (19, 20) se différencient d'environ 10 %.
